# EUROPÄISCHE PATENTSCHRIFT

(11) **EP 1 999 869 B1**
(45) Veröffentlichungstag und Bekanntmachung des Hinweises auf die Patenterteilung: **17.02.2016**
(21) Anmeldenummer: 07723790.7
(22) Anmeldetag: 29.03.2007
(51) Int. Cl.: H04B 10/80

(54) **OPTISCHES DATENBUS-SYSTEM**
OPTICAL DATA BUS SYSTEM
SYSTEME DE BUS DE DONNEES

(30) Priorität: 30.03.2006 DE 102006014848
(43) Veröffentlichungstag der Anmeldung: 10.12.2008
(73) Patentinhaber: Rohde & Schwarz GmbH & Co. KG, 81671 München (DE)
(72) Erfinder: KREUSSER, Stefan, 82140 Neu-Esting (DE)
(74) Vertreter: Körfer, Thomas
(86) Internationale Anmeldenummer: PCT/EP2007/002848
(87) Internationale Veröffentlichungsnummer: WO 2007/112960

(56) Entgegenhaltungen:
- WO-A-00/16503
- GB-A- 2 272 591
- US-A- 4 850 044

## Beschreibung

Die vorliegende Erfindung betrifft ein optisches Datenbus-System.

Aus der DE 197 15 636 A1 ist eine Vorrichtung zur drahtlosen optischen Übertragung von Daten-, Sprach-, Ton- und Bildinformationen bekannt, die Strecken von mehr als 2,5 km auch bei schlechten Witterungsverhältnissen, wie Nebel, Nieselregen oder Regenschauern überbrücken kann.
Die Vorrichtung gemäß der DE 197 15 636 A1 umfasst wenigstens ein zylinderförmiges Sendemodul, ein zylinderförmiges Empfangsmodul, eine Sendeoptik, eine Empfangsoptik, eine Navigationshilfe und eine in ihrer Längsachse bewegliche Zielvorrichtung, wobei die Zielvorrichtung zwischen der Sendeoptik und der Empfangsoptik angeordnet ist, sowie eine oder mehrere Schaltplatinen eine oder mehrere Hybrideinheiten, und eine oder mehrere Justiervorrichtungen.

Nachteilig bei der in der DE 197 15 636 A1 beschriebenen Vorrichtung zur drahtlosen optischen Übertragung ist, dass diese aufwendig justiert werden muss, um eine optische Übertragungsstrecke fest zu installieren. Dazu sind Justiervorrichtungen notwendig, für die je nach der Genauigkeit der erforderlichen Justage viele mechanische bzw. auch feinmechanische Komponenten vorgesehen sind. Ferner muss sichergestellt sein, dass die einmal justierte Übertragungsstrecke mittels einer Arretierungsvorrichtung stabil bleibt und sich nicht nach einer gewissen. Nutzungsdauer wieder verstellt. Der mechanische Aufwand für die Justierung und Arretierung bewirkt einen erhöhten baulichen Aufwand bzw. einen erhöhten Platzbedarf für eine Vorrichtung zur drahtlosen optischen Übertragung, so dass es nicht möglich ist, eine Vorrichtung dieser Art in ein modular aufgebautes Gerät zu integrieren, da die im Stand der Technik bekannten Maßnahmen zur Justierung und Arretierung wegen des erhöhten Platzbedarfs nicht geeignet sind, um in einem weiteren Gerät eingebaut zu werden.

Die WO 00/16503 A1 lehrt ein drahtloses optisches Bussystem, welches aus redundanten Sendern und Empfängern besteht, um eine optische Verbindung zwischen zwei Schaltkreisen in einem Rechner zu realisieren. Der Transmitter im ersten Schaltkreis besitzt für jeden Kanal je einen elektrooptischen Umwandler. Im zweiten Schaltkreis sind doppelt so viele Empfänger wie Transmitter im ersten Schaltkreis. Die empfangenen optischen Signale werden wieder in elektrische Signale umgesetzt. Das System besitzt eine Einrichtung, um geometrische Fehler in der Anordnung zu erkennen. Im Fall, dass Fehler bei der Anordnung von Emitter und Empfänger auftreten, werden die Datenströme auf andere Emitter/Empfänger-Paare geroutet. Die emitterseitige Optik richtet das Licht parallel.
Eine Möglichkeit wie die geometrische Toleranz zwischen einem Emitter/Empfänger-Paar erhöht werden soll, wird nicht offenbart.

Eine weitere optische Datenübertragung nach dem Stand der Technik ist aus der US-A-6912360 bekannt.

Es ist daher die Aufgabe ein Datenbus-System für eine drahtlose Übertragung zu schaffen, welches ohne Probleme in weitere modular aufgebaute Geräte integriert werden kann, ohne zusätzlichen Aufwand für Justage und Arretierung zu betreiben.

Diese Aufgabe wird von dem erfindungsgemäßen optischen Datenbus-System zur drahtlosen Signalübertragung zwischen zwei Modulen gemäß des Anspruchs 1 gelöst.

Die in den Unteransprüchen ausgeführten Maßnahmen betreffen vorteilhafte Weiterbildungen des erfindungsgemäßen optischen Datenbusses.

Vorteilhafterweise ist in dem Sender eine Laserdiode und in dem Empfänger ein auf den von der Laserdiode emittierten Laserstrahl ausgerichtetes Photoelement, insbesondere eine Photodiode, vorgesehen.

Der optische Datenbus des erfindungsgemäßen Systems zur drahtlosen Signalübertragung wird jeweils zwischen zwei Modulen eines Geräts angewandt, wobei die Module vorteilhafterweise jeweils mit einem Sender und einem Empfänger ausgestattet sind, so dass eine bidirektionale Verbindung zwischen den Modulen, die einander gegenüberliegen ermöglicht ist.

Von Vorteil ist zusätzlich, wenn für die Umwandlung von elektrischen Steuer-Signalen in für die optische Modulation geeignete Modulations-Signale bzw. für die Umwandlung von optischen Modulations-Signalen in Steuer-Signale jeweils ein Prozessor vorgesehen ist, so dass die jeweilige Umwandlung der Signale mit hoher Geschwindigkeit abläuft.

Vorteilhafterweise handelt es sich bei der Laserdiode um eine VCSEL (Vertical Cavity Surface Emitting Laser) Laserdiode, die senkrecht zu einer definierten Ebene kohärente Lichtstrahlen emittiert, wobei die Richtung der kohärenten Lichtstrahlen durch eine gekippte oder auch gedrehte Anordnung der VCSEL Laserdiode innerhalb des Senders ohne zusätzlichen Justier-Aufwand beim Sender bzw. bei der Gesamtanordnung geändert werden kann.

Weiterhin ist von Vorteil, wenn die Wellenlänge des emittierten Laserstrahls im für das menschliche Auge sichtbaren Spektralbereich liegt, so dass der Anwender durch eine einfache visuelle Prüfung sicherstellen kann, dass der emittierte Laserstrahl den empfindlichen Bereich des dem Sender gegenüber angeordneten Photoelements bestrahlt.

Von Vorteil ist außerdem, wenn innerhalb des Senders eine Linse zur Aufweitung des emittierten Laserstahls integriert ist, so dass der emittierte Laserstrahl eine definierte Divergenz erfährt, wobei die räumliche Toleranz der optischen Übertragungsstrecke erhöht ist und der emittierte Laserstrahl auch dann den empfindlichen Bereich der Photodiode trifft, wenn die Ausrichtung der Photodiode auf den Sender nicht perfekt ist.

Zusätzlich von Vorteil ist, wenn innerhalb des Empfängers eine Linse zur Bündelung des empfangenen Laserstrahls integriert ist, so dass gewährleistet ist, dass die Intensität des empfangenen Laserstrahls am Photoelement für die Rekonstruktion des übertragenen Nutzsignals ausreicht.

Ferner ist von Vorteil, wenn die räumliche Ausdehnung der drahtlosen Signalübertragung innerhalb einer definierten Vorzugsrichtung erfolgt, so dass der erfindungsgemäße optische Datenbus für den Anwender leicht zu installieren ist.

Außerdem ist von Vorteil, wenn das eigentliche Nutzsignal, welches z. B. ein elektrisches Steuer-Signal ist, auf ein optisches Signal moduliert wird, so dass der Aufwand bezüglich elektromagnetischer Verträglichkeit des hochfrequenten Nutzsignals verringert ist, wobei das modulierte optische Signal auf der Empfängerseite wieder demoduliert wird, damit das Nutzsignal als elektrisches Signal weitergeleitet bzw. weiterverarbeitet werden kann.

Weiterhin ist von Vorteil, wenn die Module jeweils in einem vorzugsweise metallischen Gehäuse gekapselt sind und im Bereich des Senders bzw. des Empfängers ein für den Laserstrahl transparentes Fenster aufweisen, wobei das metallische Gehäuse zur Abschirmung vom umgebenden hochfrequenten Signals dient.

Ein weiterer Vorteil des erfindungsgemäßen optischen Datenbusses besteht darin, dass der Informationsaustausch von digitalen Daten mittels drahtloser Signalübertragung eine hohe Datenrate haben kann, wobei die Datenrate z. B. mindestens 16 Mbit/s beträgt und höher ist als die höchste Datenrate, die über eine Infrarotschnittstelle möglich ist.

Außerdem hat der erfindungsgemäße optische Datenbus den Vorteil einer verbesserten elektromagnetischen Verträglichkeit, da die elektrischen Verbindungen sehr kurz gehalten werden können und die Baugruppen des Senders und des Empfängers einer Übertragungsrichtung galvanisch entkoppelt sind.

Durch die kurzen elektrischen Verbindungen vereinfachen sich vorteilhafterweise Layout und Aufbau der Module.

Ausführungsbeispiele der erfindungsgemäßen Lösung der ober genannten Aufgabe sind Gegenstand der nachfolgenden Beschreibung und der Zeichnungen. In den Zeichnungen zeigen:
- Fig. 1: eine schematische Darstellung eines geöffneten Funkgeräts mit einer Anwendung des erfindungsgemäßen optischen Datenbusses;
- Fig. 2: eine schematische Darstellung von zwei benachbarten Modulen des in Fig. 1 dargestellten Funkgetäts inklusive einer schematischen Darstellung des erfindungsgemäßen optischen Datenbusses und
- Fig. 3: eine schematische Darstellung des erfindungsgemäßen optischen Datenbusses bei benachbarten Modulen.

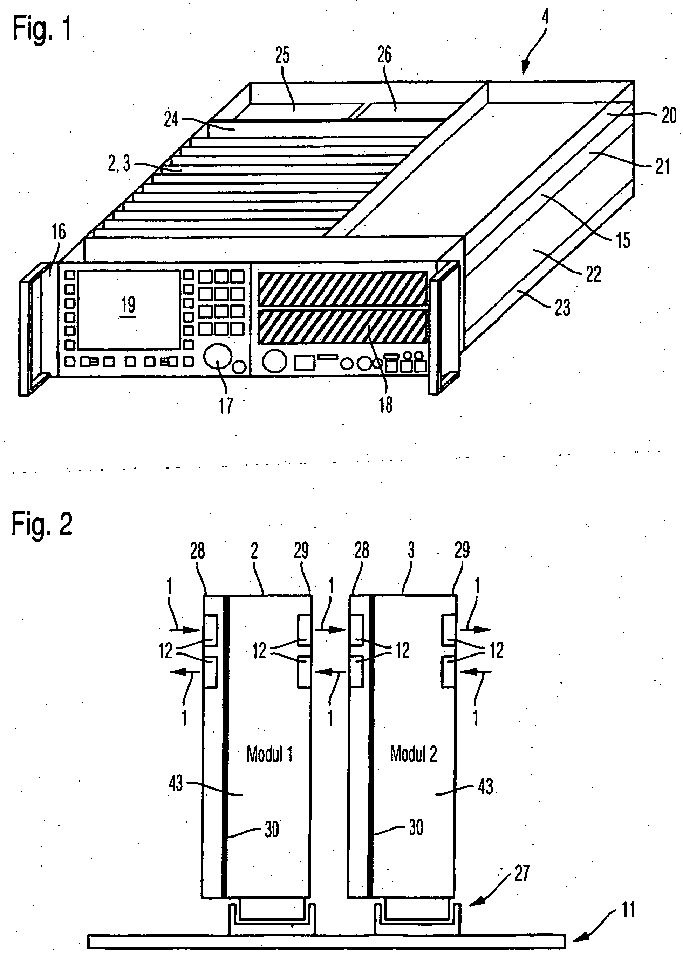

Fig. 1 zeigt eine schematische Darstellung eines geöffneten Geräts 4, das im Ausführungsbeispiel ein Funkgerät ist, mit der Anwendung des erfindungsgemäßen optischen Datenbusses 1.

Das Gerät 4 mit der Anwendung des erfindungsgemäßen optischen Datenbusses 1 weist ein Netzteil 15, eine in Fig. 2 dargestellte Hauptplatine 11 (Motherboard) und ein Frontpanel 16 mit einer Anordnung von Bedienelementen 17, einem Lüftungsschlitz 18 und einen Monitor 19 auf. Hinter dem Frontpanel 16 ist das Netzteil 15 angeordnet, das einen Endstufenverstärker 20 oder eine integrierte Wechselspannungsquelle 21, eine Wärmesenke 22 mit Lüfterelementen und eine Gleichspannungsquelle 23 enthält.

Neben dem Netzteil 15 befindet sich direkt hinter dem Frontpanel 16 die Hauptplatine 11, auf welcher bis zu elf Module 2, 3 wie beispielsweise Hochfrequenzmodule, Steuermodule oder Module zur digitalen Signalverarbeitung angeordnet sein können. Der Bereich für die maximal elf Module 2, 3 wird von einer Trennwand 24 begrenzt, die parallel zu den Modulen 2, 3 angebracht ist. Hinter dieser Trennwand 24 befindet sich ein Bereich 25 für zusätzliche Schnittstellen-Anschlüsse 26 bzw. Verkabelungen für weitere Datenbusse.

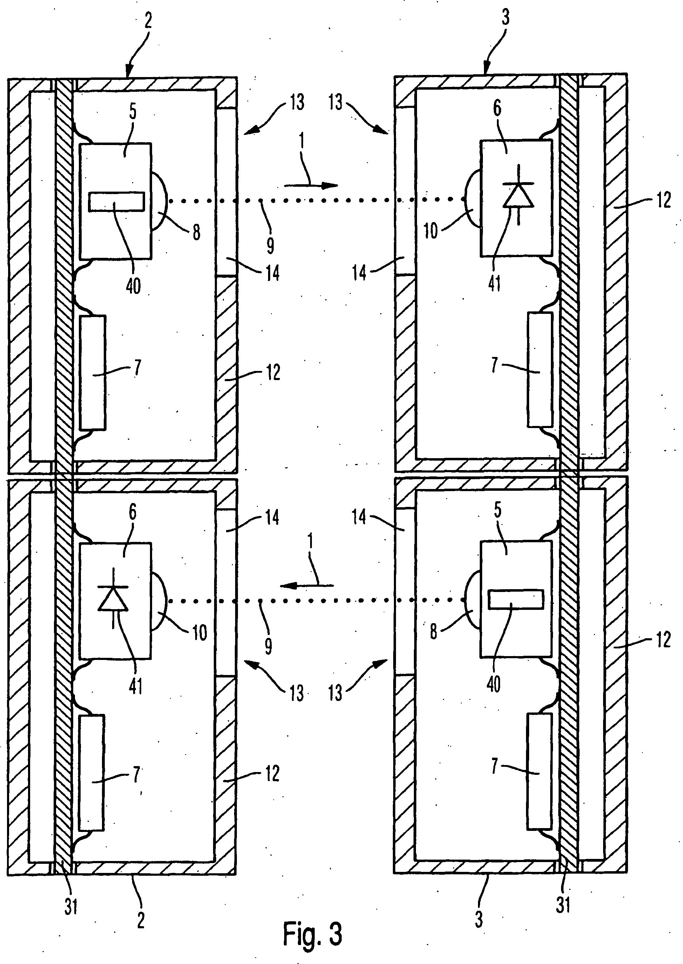

Zwischen jeweils zwei benachbarten Modulen 2, 3 ist ein erfindungsgemäßer optischer Datenbus 1 vorgesehen. Der erfindungsgemäße optische Datenbus 1 dient zur drahtlosen Signalübertragung zwischen jeweils zwei Modulen 2, 3 des Geräts 4, wobei die Module 2, 3 jeweils mit einem Sender 5 und einem Empfänger 6 und jeweils mit einem Prozessor 7 für die Umwandlung von elektrischen Steuer-Signalen zur optischen Modulation geeignete Modulations-Signale bzw. für die Umwandlung von optischen Modulations-Signalen in elektrische Steuer-Signale ausgestattet sind. Dies ist in Fig. 3 dargestellt.

Der Sender 5 des erfindungsgemäßen optischen Datenbusses 1 ist eine Laserdiode 40; und der Empfänger 6 des erfindungsgemäßen optischen Datenbusses 1 ist ein auf den von der Laserdiode emittierten Laserstrahl 9 ausgerichtetes Photoelement bzw. eine Photodiode 41, deren spektrale Empfindlichkeit den spektralen Bereich des emittierten Laserstrahls 9 beinhaltet. Bei der Laserdiode 40 des erfindungsgemäßen optischen Datenbusses 1 kann es sich bevorzugt um eine VCSEL (Vertical Cavity Surface Emitting Laser) Laserdiode handeln, die kohärente Lichtstrahlen mit einer Wellenlänge zwischen 780nm und 850nm senkrecht zu einer innerhalb des Moduls 2, 3 bzw. innerhalb der Laserdiode 40 definierten Ebene emittiert.

Innerhalb des Senders 5 ist eine Linse 8 zur Aufweitung des Laserstrahls 9 integriert, so dass der emittierte Laserstrahl 9 eine definierte Divergenz erfährt und den Toleranzbereich für die Justierung des erfindungsgemäßen optischen Datenbusses 1 erweitert ist.

Innerhalb des Empfängers 6 des erfindungsgemäßen optischen Datenbusses 1 ist eine Linse 10 zur Bündelung des Laserstrahls 9 integriert, so dass beim Empfänger 9 eine ausreichende Intensität des ankommenden Laserstrahls 9 gewährleistet ist.

Die drahtlose Signalübertragung mittels des erfindungsgemäßen optischen Datenbusses 1 ist bidirektional, wobei zwischen zwei benachbarten Modulen 2, 3 jeweils eine Punkt-zu-Punkt Verbindung installiert ist und das Modul 2 sowohl mit dem rechten benachbarten Modul 3 als auch mit dem linken hier nicht weiter dargestellten benachbarten Modul eine Punkt-zu-Punkt Verbindung aufweist. Die räumliche Ausdehnung der drahtlosen Signalübertragung zwischen zwei benachbarten Modulen 2, 3 erfolgt innerhalb einer definierten Vorzugsrichtung.

Vor der drahtlosen Signalübertragung wird das hochfrequente optische Signal der Laserdiode 40 mit einem Nutzsignal moduliert. Dieses modulierte Signal wird dann zum benachbarten Modul 2, 3 übertragen, wo es am Empfänger 6 wieder demoduliert wird. Lediglich das rekonstruierte Nutzsignal wird über den Prozessor 7 und einer zwischen Sender 5 und Empfänger 6 vorgesehenen Leiterplatte 31 weitergeleitet bzw. weiterverarbeitet.

Fig. 2 zeigt eine schematische Darstellung von zwei benachbarten Modulen 2, 3 des in Fig. 1 dargestellten Geräts 4, wobei die benachbarten Module 2, 3 mittels zwei Modulsteckern 27 elektrisch mit der Hauptplatine 11 (Motherboard) verbunden sind. An der Vorderseite 28 und der Rückseite 29 der Module 2, 3 sind jeweils schematisch dargestellte Sender 5 bzw. Empfänger 6 vorgesehen, so dass ein Modul 2, 3 sowohl mit seinem rechten Nachbarn als auch mit seinem linken Nachbarn über eine bidirektionale Verbindung, die mittels des erfindungsgemäßen optischen Datenbusses 1 hergestellt ist, Daten austauschen kann. Von den Sendern 5 bzw. Empfängern 6 sind in Fig. 2 jeweils nur das Gehäuse 12 dargestellt.

Eine stabile Befestigung der Module 2, 3 im Gerät 4 kann z.B. dadurch realisiert werden, dass innerhalb der Seitenfläche des Modulgehäuses bzw. des metallischen Gehäuses 43 des einzelnen Moduls 2, 3 ein Führungsschlitz 30 angebracht ist, der bei einem Verschluss des Gesamtgehäuses des Geräts 4 einen Gleitsteg hintergreift, der sich auf der Innenseite eines Gehäusedeckels für das Gesamtgehäuse befindet und hier nicht weiter dargestellt ist.

Fig. 3 zeigt eine schematische Darstellung des erfindungsgemäßen optischen Datenbusses 1 in Richtung benachbarter Module 2, 3, wobei die Module 2, 3 jeweils in einem metallischen Gehäuse 12 gekapselt sind, und das metallische Gehäuse 12 im Bereich des Senders 5 bzw. des Empfängers 6 ein Fenster 14 aufweist, das aus Material besteht, welches für den vom Sender 5 emittierten Laserstrahl 9 transparent ist. Geeignetes Material ist z. B. ein transparenter Kunststoff wie PMMA. Denkbar ist aber auch, dass die Öffnung offen bleibt.

Dabei ist mittels drahtloser Signalübertragung ein Informationsaustausch von digitalen Daten mit einer hohen Datenrate von z. B. mindestens 16 Mbit/s implementiert, wobei die erzielbare Datenrate mindestens der maximal möglichen Datenrate einer optischen Übertragungsstrecke mit infraroter Strahlung entspricht.

Aus der schematischen Darstellung gemäß den Figuren 1 und 3 ist ersichtlich, dass der Sender 5 des ersten Moduls 2 vom Empfänger 6 des zweiten Moduls 3 nur wenige Zentimeter entfernt ist, so dass die optische Punkt-zu-Punkt Verbindung nicht abgeschirmt ist.

Gegenüber dem herkömmlichen Informationsaustausch mit elektrischen Signalen hat die optische Übertragung folgende Vorteile: Es ergeben sich verbesserte EMV Eigenschaften (Elektromagnetische Verträglichkeit), da die elektrischen Verbindungen sehr kurz gehalten werden können, insbesondere die elektrische Verbindung zwischen Prozessor 7 und optischem Sender 5 bzw. Empfänger 6 und durch die galvanische Entkopplung der beiden Baugruppen 2 und 3. Durch die kurzen elektrischen Verbindungen vereinfachen sich Layout und Aufbau der beiden Baugruppen 2, 3. Bei hochfrequenten Signalen für schnelle elektrische Datenbusse müssen Leitungsimpedanzen über die gesamte Leitungslänge genau eingehalten werden. Speziell an Steckverbindungen ist dies bei elektrischen Verbindungen nur bedingt oder mit teuren Steckern erreichbar.

Die Erfindung ist nicht auf die dargestellten Ausführungsbeispiele beschränkt und kann insbesondere auch innerhalb eines Racks mit unterschiedlichen miteinander kommunizierenden Hochfrequenzbauteilen, wie zum Beispiel einem Mobilfunktester angewandt werden und dort einen Messbus, z. B. nach den IEC-Standards bilden.

## Patentansprüche

1. Optisches Datenbus-System (1) zur drahtlosen Signalübertragung zwischen zwei Modulen (2, 3) eines Geräts (4), wobei die Module (2, 3) jeweils mit zumindest einem Sender (5) und/oder zumindest einem Empfänger (6) ausgestattet sind und
wobei der Sender (5) eine Laserdiode (40) ist, und der Empfänger (6) ein auf den von der Laserdiode (40) emittierten Laserstrahl (9) ausgerichtetes Photoelement (41) ist,
wobei der Sender (5) bzw. Empfänger (6) eines Moduls (2,3) jeweils in einem metallischen Gehäuse (12) gekapselt ist, und dass das metallische Gehäuse (12) im Bereich (13) des Senders (5) bzw. des Empfängers (6) ein Fenster (14) aufweist, das aus Material besteht, welches für den Laserstrahl (9) transparent ist,
**dadurch gekennzeichnet,**
**dass** der Sender (5) einen Laserstrahl (9) mit einer Wellenlänge emittiert, die kleiner als 850 nm aber größer als 780 nm ist und
**dass** innerhalb des Senders (5) eine Linse (8) zur Aufweitung des emittierten Laserstrahls (9) integriert ist.

2. Optisches Datenbus-System nach Anspruch 1,
**dadurch gekennzeichnet,**
**dass** das Photoelement (41) eine Photodiode ist.

3. Optisches Datenbus-System nach Anspruch 1 oder 2
**dadurch gekennzeichnet,**
**dass** die Laserdiode (40) eine VCSEL (Vertical Cavity Surface Emitting Laser) Laserdiode ist.

4. Optisches Datenbus-System nach einem der Ansprüche 1 bis 3,
**dadurch gekennzeichnet,**
**dass** die Laserdiode (40) kohärente Lichtstrahlen senkrecht zu einer Längserstreckung des Moduls (2, 3) emittiert.

5. Optisches Datenbus-System nach einem der Ansprüche 1 bis 4,
**dadurch gekennzeichnet,**
**dass** innerhalb des Empfängers (6) eine Linse (10) zur Bündelung des empfangenen Laserstrahls (9) integriert ist.

6. Optisches Datenbus-System nach einem der Ansprüche 1 bis 5,
**dadurch gekennzeichnet,**
**dass** die drahtlose Signalübertragung bidirektional ist.

7. Optisches Datenbus-System nach einem der Ansprüche 1 bis 6,
**dadurch gekennzeichnet,**
**dass** die räumliche Ausdehnung der drahtlosen Signalübertragung innerhalb einer Vorzugsrichtung erfolgt.

8. Optisches Datenbus-System nach einem der Ansprüche 1 bis 7,
**gekennzeichnet**
**durch** eine Modulation eines hochfrequenten optischen Signals mit einem Nutzsignal.

9. Optisches Datenbus-System nach einem der Ansprüche 1 bis 8,
**gekennzeichnet,**
**durch** eine Demodulation eines empfangenen modulierten optischen Signals.

10. Optisches Datenbus-System nach einem der Ansprüche 1 bis 9,
**dadurch gekennzeichnet,**
**dass** zumindest zwei Module (2, 3) innerhalb des Geräts (4) benachbart angeordnet sind.

11. Optisches Datenbus-System nach Anspruch 10,
**dadurch gekennzeichnet,**
**dass** die Module (2, 3) über eine Hauptplatine (11) miteinander verbunden sind.

12. Optisches Datenbus-System nach einem der Ansprüche 1 bis 11,
**dadurch gekennzeichnet**
**dass** mittels drahtloser Signalübertragung ein Informationsaustausch von digitalen Daten mit einer hohen Datenrate von mindestens 16 Mbit/s implementiert ist.

13. Optisches Datenbus-System nach einem der Ansprüche 1 bis 12,
**dadurch gekennzeichnet,**
**dass** der Sender (5) des ersten Moduls (2) vom Empfänger (6) des zweiten Moduls (3) nur wenige Zentimeter entfernt ist.

14. Optisches Datenbus-System nach einem der Ansprüche 1 bis 13,
**dadurch gekennzeichnet,**
**dass** das Gerät (4) ein Funkgerät ist.

## Claims

1. Optical data bus system (1) for wireless signal transmission between two modules (2, 3) of a device (4), wherein the modules (2, 3) are in each case equipped with at least one transmitter (5) and/or at least one receiver (6) and
wherein the transmitter (5) is a laser diode (40), and the receiver (6) is a photoelectric cell (41) lined up on the laser beam (9) emitted by the laser diode (40), wherein the transmitter (5) and the receiver (6) of a module (2, 3) are in each case encapsulated in a metallic housing (12), and in the region (13) of the transmitter (5) and the receiver (6) the metallic housing (12) exhibits a window (14) which is made of material which is transparent for the laser beam (9),
**characterised in that**
the transmitter (5) emits a laser beam (9) with a wavelength which is less than 850 nm but more than 780 nm and
**in that** a lens (8) is incorporated inside the transmitter (5) to widen the emitted laser beam (9).

2. Optical data bus system according to claim 1,
**characterised in that**
the photoelectric cell (41) is a photo diode.

3. Optical data bus system according to claim 1 or 2,
**characterised in that**
the laser diode (40) is a VCSEL (vertical cavity surface emitting laser) diode.

4. Optical data bus system according to one of claims 1 to 3,
**characterised in that**
the laser diode (40) emits coherent beams of light perpendicularly to a longitudinal extension of the module (2, 3).

5. Optical data bus system according to one of claims 1 to 4,
**characterised in that**
a lens (10) is incorporated inside the receiver (6) to concentrate the received laser beam (9).

6. Optical data bus system according to one of claims 1 to 5,
**characterised in that**
the wireless signal transmission is bidirectional.

7. Optical data bus system according to one of claims 1 to 6,
**characterised in that**
the spatial expansion of the wireless signal transmission takes place within a predominant direction.

8. Optical data bus system according to one of claims 1 to 7,
**characterised by**
modulation of a high-frequency optical signal with a wanted signal.

9. Optical data bus system according to one of claims 1 to 8,
**characterised by**
demodulation of a received modulated optical signal.

10. Optical data bus system according to one of claims 1 to 9,
**characterised in that**
at least two modules (2, 3) are arranged adjacent to one another inside the device (4).

11. Optical data bus system according to claim 10,
**characterised in that**
the modules (2, 3) are connected with one another by means of a main circuit board (11).

12. Optical data bus system according to one of claims 1 to 11,
**characterised in that**
an exchange of information in the form of digital data is implemented by means of wireless signal transmission with a high data rate of at least 16 Mbit/s.

13. Optical data bus system according to one of claims 1 to 12,
**characterised in that**
the transmitter (5) of the first module (2) is only a few centimetres away from the receiver (6) of the second module (3).

14. Optical data bus system according to one of claims 1 to 13,
**characterised in that**
the device (4) is a radio device.

## Revendications

1. Système optique de bus de données (1) pour la transmission de signaux sans fil entre deux modules (2, 3) d'un appareil (4), dans lequel les modules (2, 3) sont équipés respectivement d'au moins un émetteur (5) et/ou d'au moins un récepteur (6) et
dans lequel l'émetteur (5) est une diode laser (40), et le réseau récepteur (6) est un élément photoélectrique (41) dirigé sur un faisceau laser (9) émis par la diode laser (40),
dans lequel l'émetteur (5) ou le récepteur (6) d'un module (2, 3) est encapsulé respectivement dans un boîtier métallique (12), et en ce que le boîtier métallique (12) présente, dans la zone (13) de l'émetteur (5) ou du récepteur (6), une fenêtre (14), qui est constituée d'un matériau, qui est transparent pour le faisceau laser (9),
**caractérisé en ce que**
l'émetteur (5) émet un faisceau laser (9) avec une longueur d'onde, qui est inférieure à 850 nm mais supérieure à 780 nm et
**en ce qu'**une lentille (8) pour élargir le faisceau laser émis (9) est intégrée dans l'émetteur (5).

2. Système optique de bus de données selon la revendication 1,
**caractérisé en ce que**
l'élément photoélectrique (41) est une photodiode.

3. Système optique de bus de données selon la revendication 1 ou 2,
**caractérisé en ce que**
la diode laser (40) est une diode laser VCSEL (laser émettant par la surface à cavité verticale).

4. Système optique de bus de données selon l'une des revendications 1 à 3,
**caractérisé en ce que**
la diode laser (40) émet des rayons lumineux cohérents perpendiculairement à une direction longitudinale du module (2, 3).

5. Système optique de bus de données selon l'une des revendications 1 à 4,
**caractérisé en ce que**
une lentille (10) en vue de la focalisation du faisceau laser reçu (9) est intégrée dans le récepteur (6).

6. Système optique de bus de données selon l'une des revendications 1 à 5,
**caractérisé en ce que**
la transmission de signal sans fil est bidirectionnelle.

7. Système optique de bus de données selon l'une des revendications 1 à 6,
**caractérisé en ce que**
l'extension spatiale de la transmission de signaux sans fil se produit selon une orientation préférentielle.

8. Système optique de bus de données selon l'une des revendications 1 à 7,
**caractérisé par**
une modulation d'un signal optique haute fréquence avec un signal utile.

9. Système optique de bus de données selon l'une des revendications 1 à 8,
**caractérisé par**
une démodulation d'un signal optique modulé reçu.

10. Système optique de bus de données selon l'une des revendications 1 à 9,
**caractérisé en ce que**
au moins deux modules (2, 3) sont disposés adjacents dans l'appareil (4).

11. Système optique de bus de données selon la revendication 10,
**caractérisé en ce que**
les modules (2, 3) sont reliés l'un à l'autre par l'intermédiaire d'une carte principale (11).

12. Système optique de bus de données selon l'une des revendications 1 à 11,
**caractérisé en ce que**
un échange d'informations de données numériques avec un débit binaire élevé d'au moins 16 Mbit/s est réalisé grâce à une transmission de signal sans fil.

13. Système optique de bus de données selon l'une des revendications 1 à 12,
**caractérisé en ce que**
l'émetteur (5) du premier module (2) n'est éloigné que de quelques centimètres du récepteur (6) du second module (3).

14. Système optique de bus de données selon l'une des revendications 1 à 13,
**caractérisé en ce que**
l'appareil (4) est un appareil radio.
